**Europäisches Patentamt**

**European Patent Office**

**Office européen des brevets**

(19)

(11) Veröffentlichungsnummer : **0 149 183**
**B1**

(12)         **EUROPÄISCHE PATENTSCHRIFT**

(45) Veröffentlichungstag der Patentschrift :
07.09.88

(51) Int. Cl.⁴ : **B 30 B   9/24, A 23 N   1/00**

(21) Anmeldenummer : **84115813.2**

(22) Anmeldetag : **19.12.84**

(54) Verfahren zum Auspressen, insbesondere von Früchten.

(30) Priorität : 29.12.83 DE 3347447

(43) Veröffentlichungstag der Anmeldung :
24.07.85 Patentblatt 85/30

(45) Bekanntmachung des Hinweises auf die Patenterteilung : 07.09.88 Patentblatt 88/36

(84) Benannte Vertragsstaaten :
**BE CH DE FR GB LI LU NL SE**

(56) Entgegenhaltungen :
**AT-B-   319 972**
**DE-A- 1 502 250**
**DE-A- 2 644 976**

(73) Patentinhaber : **Gebr. Bellmer GmbH & Co. KG, Maschinenfabrik**
**Hauptstrasse 37**
**D-7532 Niefern 1 (DE)**

(72) Erfinder : **Kollmar, Ulrich**
**Auf dem Berg 17**
**D-7530 Pforzheim-Würm (DE)**

(74) Vertreter : **Frank, Gerhard, Dipl.-Phys. et al**
**Patentanwälte Dr. F. Mayer & G. Frank Westliche 24**
**D-7530 Pforzheim (DE)**

EP 0 149 183 B1

**Beschreibung**

Die Erfindung betrifft ein Verfahren zum Auspressen von Früchten in mindestens zwei Schritten, wobei im ersten Schritt die Früchte zur Gewinnung von naturreinem Saft erster Qualität ausgepreßt werden, das daraus gewonnene Fruchtkonzentrat (Trester) mit Wasser versetzt wird und unmittelbar einer zweiten Pressung zur Gewinnung eines Saftes zweiter Qualität zugeführt wird.

Dieses zweistufige Verfahren wird in der Getränkeindustrie üblicherweise angewendet, wobei insoweit eine Übereinstimmung mit den einschlägigen gesetzlichen Bestimmungen erzielbar ist, als der nach der ersten Pressung gewonnene naturreine Saft (ohne weitere Zusätze) als « Fruchtsaft » bezeichnet werden darf, wogegen der im zweiten Verfahrensschritt gewonnene Saft der Ausgangsstoff für « Nektar » oder « Fruchtsaftgetränk » darstellt, für deren Zusammensetzung ebenfalls gesetzliche Vorschriften existieren.

Ein gattungsgemäßes Verfahren ist aus der DE-A-2 644 976 bekannt. Bei einem solchen Verfahren ist es von Wichtigkeit, den nach der ersten Pressung abgeworfenen Trester soweit als möglich von noch löslichen Fruchtbestandteilen zu befreien, um das Ergebnis des ersten Preßvorganges (naturreiner Saft 1. Qualität) zu verbessern, andererseits aber das Gefüge des Tresters durch mechanische Beanspruchung nicht so sehr zu strapazieren, daß abgeriebene Trester-Bestandteile mit in diesen Saft 1. Qualität abgeschwemmt werden ; der Trester soll möglichst vollständig erst bei der zweiten Pressung verarbeitet werden.

Bei der vorbekannten Lösung nach der DE-A-2 644 976 ist im Übergabebereich des Tresters ein Mischer vorgesehen, wo der von der ersten Presse abgeworfene Trester mit einer zugespritzten Wassermenge reagiert. Die Behandlung in diesem Mischer stellt für das Gefüge des Tresters jedoch eine starke mechanische Beanspruchung dar, mit der Folge, daß ein ungestörter Quellvorgang, der noch zur Lösung der Restbestandteile beitragen soll, nicht stattfinden kann. Die Aufgabe der Erfindung besteht demgegenüber darin, das vorbekannte Preßverfahren bei gleicher Preßleistung schonender auszugestalten.

Diese Aufgabe wird erfindungsgemäß dadurch gelöst, daß die erste Pressung in einer ersten Bandfilterpresse durchgeführt wird, deren Auswurföffnung Einrichtungen zum Auflockern des Gefüges des Tresters aufweist, daß der angefeuchtete und aufgelockerte Trester auf gleichmäßige Schichtdicke egalisiert wird und dann während einer einstellbaren Reaktionszeit von mindestens 3 Minuten, in der er aufquillt und eine Lösung der restlichen Trockensubstanz durch Diffusion stattfinden kann, auf einem Band einer zweiten Bandfilterpresse zugeführt wird, wo die zweite Pressung beginnt.

Überraschenderweise hat sich herausgestellt, daß eine Reaktionszeit von mindestens 3 Minuten, in der der Trester unbeeinflußt bleibt, bereits ausreicht, um den gewünschten Effekt der Lösung der restlichen Trockensubstanz, d. h. des Zuckers und der Aromastoffe durch Diffusion zu erreichen. Dadurch, daß zwei separate Bandfilterpressen für das erfindungsgemäße Verfahren vorgesehen sind, wird auch ausgeschlossen, daß ein Austausch bzw. Weitertransport von Fruchtbestandteilen bzw. Tresterbestandteilen und Trübstoffen zwischen den beiden Preßabschnitten stattfinden kann, was die jeweilige Qualität der in diesen Abschnitten gewonnenen Fruchtsäfte beeinträchtigen kann und bei der vorbekannten Anordnung gemäß der DE-A-2 644 976 nicht ausgeschlossen werden kann.

Vorteilhafterweise werden zur Durchführung des erfindungsgemäßen Verfahrens zwei bauartgleiche Bandfilterpressen eingesetzt, beispielsweise vom bekannten Winkelpressen-Typ, wie er in der DE-AS-22 52 979 beschrieben ist.

Die dem Trester zur Verfügung gestellte Reaktionszeit kann dabei auf einfache Weise durch die ohnehin vorhandene, im wesentlichen horizontale Vorentsaftungsstrecke der zweiten Bandfilterpresse zur Verfügung gestellt werden, die gegebenenfalls mit einfachen Mitteln horizontal verlängerbar ist. Es sind selbstverständlich jedoch auch andere Fördermittel denkbar, wie zum Beispiel Schneckenförderer, die eine ausreichende Reaktionszeit und schonende Behandlung des Tresters gewährleisten und gleichzeitig als Transportmittel zwischen den beiden Pressen dienen.

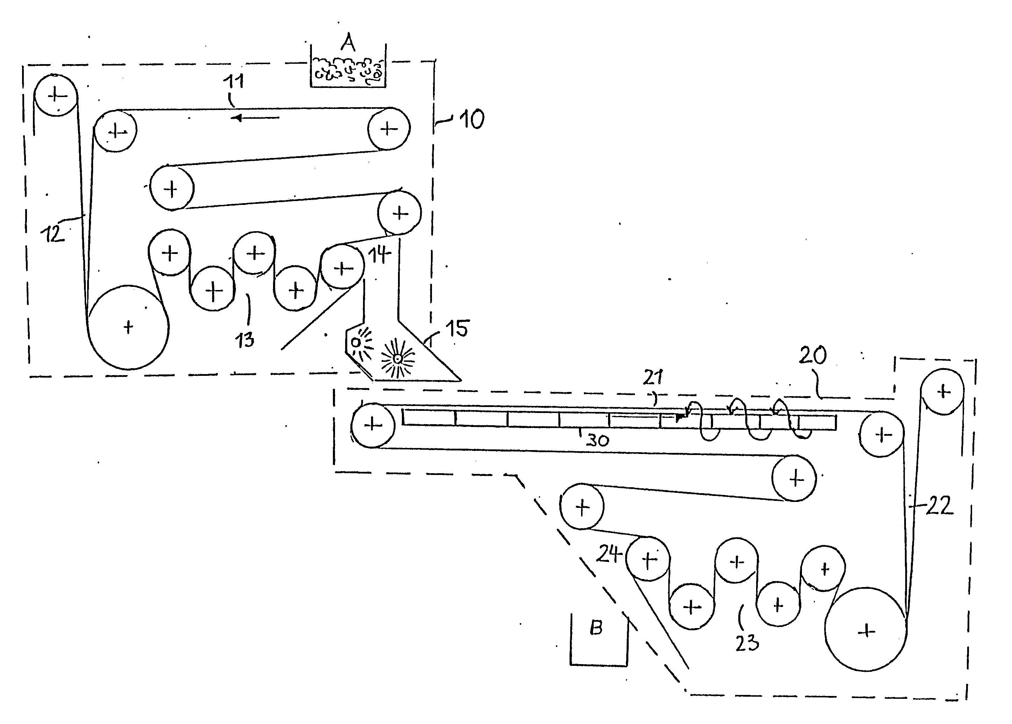

Ein Ausführungsbeispiel wird anhand der Zeichnung noch näher erläutert :

Die Vorrichtung zur Durchführung des Verfahrens besteht aus zwei bauartgleichen Filterpressen 10, 20 des Winkelpressen-Typs gemäß der DE-AS-22 52 979. Zur Verdeutlichung des Verfahrensablaufes sind in der Zeichnung Nebenaggregate und konstruktive Bauteile nicht dargestellt, lediglich die Filterbänder im Preßbereich.

Eine derartige, an sich bekannte Filterpresse weist eine horizontale Maische-Verteil- und Vorentsaftungsstrecke 11, 21 auf, an die sich eine vertikale Preßstrecke 12, 22 anschließt, wo das Preßgut zwischen den beiden Filterbändern liegt.

Die Endpressung erfolgt schließlich in einer horizontalen Preßstrecke 13,23, bei der die beiden Filterbänder gemeinsam S-förmig um gegeneinander versetzte Preßwalzen geführt sind. Der Auswurf des Filterkuchens bzw. Tresters erfolgt an einer Auswurföffnung 14,24, wo die beiden Filterbänder sich wieder trennen.

Das Filtergut, beispielsweise die auszupressende Äpfelmaische wird auf die Vorentsaftungsstrecke 11 der ersten Presse gegeben, durchläuft dann die vertikale Preßstrecke 12, die horizontale Preßstrecke 13 und an der Auswurföffnung 14 der ersten Presse 10 erscheint der ausgepreßte Trester, der nun nur noch etwa 30 % der ursprünglichen Apfelmenge bzw. Maische aufweist und als Filterkuchen von wenigen Zentimetern Dicke in Erscheinung tritt. Dieser Trester gelangt nun durch eine Einrichtung 15, in der sein Gefüge gelockert wird (beispielsweise durch eine Spezialwalze oder ähnliches) und gleichzeitig mit einer dosierbaren Menge Wasser versetzt wird. Ein Praxiswert ist etwa 8 kg Wasser auf 5 kg Trester. Die so aufgelockerten, mit Wasser versetzten Trester gelangen unmittelbar auf den Anfang der Vorentsaftungsstrecke 21 der zweiten Filterpresse 20, die so lang gewählt ist, daß während des Transportes vom Anfang bis zum Einlauf in die vertikale Preßstrecke 22 der Trester ausreichend Zeit hat, um einen Quell- und Sättigungsvorgang durchzumachen.

Der aufgequollene Trester wird dann schließlich in der vertikalen Preßstrecke 22 und der horizontalen Preßstrecke 23 ausgepreßt und an der Auswurföffnung 24 in einen Behälter B (oder Förderband oder ähnliches) abgegeben, wo er dann einer möglichen Weiterverwendung zugeführt werden kann.

Abhängig von der Art und der Qualität der Früchte läßt sich mit der erfindungsgemäßen Kombination durch Einstellung der Umlaufgeschwindigkeit der Preßbänder, durch Dosierung der Wasserzufuhr in der Einrichtung 15 und durch die Länge der zweiten Vorentsaftungsstrecke 21 ein kontinuierlicher, vollautomatischer Betrieb erreichen, bei dem (nach einer geringen Anfangsverzögerung) dessen Produkte als Fruchtsaft erster und zweiter Qualität und als entwässerter Trester unmittelbar zur Verfügung steht, ohne daß noch weitere Verarbeitungsschritte erforderlich wären. Während der gesamten Behandlung nach dem Abwurf von der ersten Pressung findet keine Strukturschädigung der Trester mehr statt.

Beide Saftqualitäten fallen gleichzeitig an und eignen sich zur sofortigen Abfüllung. Von der Aufgabe der Maische auf die erste Presse bis zum Abfall der Trester aus der zweiten Presse beträgt die Zeitspanne weniger als 20 Minuten.

Durch die Verwendung ausgereifter Pressenkonstruktionen ergibt sich ein kompakter Aufbau, ein geringer Wartungsbedarf und somit günstige Betriebskosten. Gegenüber der oben geschilderten bekannten Konzeption läßt sich insbesondere eine Reduzierung des Energiebedarfs um mindestens etwa 50 % bei gleicher Leistung erreichen. Wenn dies gewünscht ist, können die beiden Pressen auch jederzeit separat eingesetzt werden.

Ausführungsbeispiel :

18 Tonnen gemahlene Früchte (Äpfel) werden als Maische in die Presse 10 eingegeben. Daraus werden 12,6 Tonnen Preßsaft 1. Qualität (naturreiner Saft) gewonnen. 5,4 Tonnen verlassen die Presse 10 als Trester, die in der Auflockerungseinrichtung 15 fein zerkrümelt und gleichzeitig auf die Presse 20 aufgegeben werden.

Für den Extraktionsvorgang werden dabei etwa 1,8 t Wasser auf die Trester aufgegeben, damit die Quellung und Auslaugung verbliebener Wertstoffe beginnen kann. Nach einer Quellzeit von ca. 3-5 Min. auf dem Eingangsband 21 der zweiten Presse 20 gelangen die Trester in den Preßbereich der zweiten Presse 20, aus dieser Pressung werden 1,8 t Dünnsaft (Fruchtsaft 2. Qualität) gewonnen und nochmals 5,4 t Trester.

Anstelle der oben beschriebenen Gleichtromextraktion (Zugabe des Wassers bei Aufgabe auf das Eingangsband 21) kann auch eine Gegenstrom-Extraktion wie bei einem an sich bekannten Extrakteur ausgeführt werden, das heißt am Ende des Eingangsbandes 21 der Presse 20 wird Frischwasser auf die Trester aufgegeben. Der nach Durchlaufen dieser Presse gewonnene Preßsaft wird aufgefangen, zurückgepumpt und an einer Stelle aufgegeben, die näher an der Aufgabestelle liegt als die Frischwasserzugabe. Dieser Dünnsaft durchläuft die Tresterlage, reichert sich mit Wertstoffen an, wird in einer darunter angeordneten Wanne wiederum aufgefangen und nochmals an einer Stelle wieder auf die Trester aufgegeben, die noch näher zur Aufgabestelle hin liegt usw. Die frisch zerkrümelten Trester werden mit dem konzentriertesten Dünnsaft ausgelaugt, der dann den Prozeß verläßt.

Gegen- bzw. Gleichstrom-Extraktion werden in Abhängigkeit von verschiedenen Früchten eingesetzt, und zwar so, daß die jeweils höchste Ausbeute (Ertrag an Wertstoffen) verwirklicht wird, die bei 90 % oder höher liegen kann, bezogen auf die auf die Presse 10 aufgegebene Fruchtmenge.

**Patentanspruch**

Verfahren zum Auspressen von Früchten in mindestens zwei Schritten, wobei im ersten Schritt die Früchte zur Gewinnung von naturreinem Saft erster Qualität ausgepreßt werden, das daraus gewonnene Fruchtkonzentrat (Trester) mit Wasser versetzt wird und unmittelbar einer zweiten Pressung zur Gewinnung eines Saftes zweiter Qualität zugeführt wird, dadurch gekennzeichnet, daß die erste Pressung in einer ersten Bandfilterpresse (10) durchgeführt wird, deren Auswurföffnung Einrichtungen zum Auflockern des Gefüges des Tresters aufweist, daß der angefeuchtete und aufgelockerte Trester auf gleichmäßige Schichtdicke egalisiert wird, und dann während einer einstellbaren Reaktionszeit von mindestens drei Minuten, in der er aufquillt und eine Lösung der restlichen Trockensubstanz durch Diffusion stattfinden kann, auf einem Band einer zweiten Bandfilterpresse (20) zugeführt wird, wo die zweite Pressung beginnt.

**Claim**

Method of extracting the juice from fruit in at least two stages, whereby, in the first stage, the fruit is pressed to obtain top quality, naturally pure juice, and the fruit concentrate (residue) obtained therefrom is mixed with water and immediately subjected to a second pressing operation to obtain a second quality juice, characterised in that the first pressing operation is effected in a first belt-type filter press (10), the discharge aperture thereof having means for loosening the structure of the residue, in that the wet and loose residue is levelled to a uniform layer thickness, and then, during an adjustable reaction time of at least three minutes in which it swells and a separation of the residual dry substance may occur by diffusion, the residue is delivered on a belt to a second belt type filter press (20) where the second pressing operation commences.

**Revendication**

Procédé pour pressurer des fruits en au moins deux étapes, dans la première étape duquel les fruits sont pressurés pour obtenir du jus naturel de première qualité, le concentré de fruits (marc) ainsi obtenu est mélangé avec de l'eau et aussitôt soumis à un second pressurage pour obtenir un jus de deuxième qualité, caractérisé en ce que le premier pressurage est effectué dans un premier filtre-presse à bande (10) dont l'ouverture d'éjection comporte des organes pour aérer la structure du marc, en ce que le marc humidifié et aéré est égalisé de façon à lui conférer une épaisseur de couche uniforme, et ensuite durant un temps de réaction réglable d'au moins trois minutes, au cours duquel il gonfle et une dissolution de la matière sèche résiduelle par diffusion peut avoir lieu, est amené sur une bande à un second filtre-presse à bande (20) où commence le second pressurage.

0 149 183